Europäisches Patentamt

European Patent Office

Office européen des brevets

(11) Publication number: **0 243 154 B1**

(12) **EUROPEAN PATENT SPECIFICATION**

(45) Date of publication of patent specification: 26.06.91          (51) Int. Cl.⁵: **H02P 1/44**

(21) Application number: **87303511.7**

(22) Date of filing: **22.04.87**

(54) **Parallel resonant single phase motor.**

(30) Priority: **25.04.86 US 855935**
**02.06.86 US 869291**
**26.11.86 US 935009**

(43) Date of publication of application:
**28.10.87 Bulletin 87/44**

(45) Publication of the grant of the patent:
**26.06.91 Bulletin 91/26**

(84) Designated Contracting States:
**DE FR GB IT NL**

(56) References cited:
**DE-A- 1 938 260**
**DE-C- 214 062**
**DE-C- 736 960**
**US-A- 3 036 255**
**US-A- 3 657 621**

(73) Proprietor: **Lewus, Alexander J**
**9844 N. 11th Avenue**
**Phoenix Arizona 85021(US)**

(72) Inventor: **Lewus, Alexander J**
**9844 N. 11th Avenue**
**Phoenix Arizona 85021(US)**

(74) Representative: **Smith, Norman Ian et al**
**F.J. CLEVELAND & COMPANY 40-43 Chancery Lane**
**London WC2A 1JQ(GB)**

## Description

Background

Alternating current motors are widely used for a wide variety of different purposes. Such motors range in size from very small fractional horsepower motors on up to multiple horsepower sizes. Most large horsepower electric motors are three phase motors, while the majority of smaller fractional horsepower and low horsepower motors are operated from a source of single phase alternating current electricity. Single phase motors are particularly popular since most home and business alternating current supplies are in the form of single phase supplies.

Electric motors typically include a stator, which is wound with start windings and run windings connected to the source of operating power. The stator windings surround a rotor which rotates a shaft to produce the motor output. Rotors are made in a number of different configurations, such as squirrel cage rotors, high resistance rotors, low resistance rotors, wound rotors or multiple winding high and low resistance rotors. All of these configurations along with various stator windings arrangements are well known in the electric motor industry.

Conventional single phase motors frequently are constructed in a "capacitor-start" or "capacitor-start/capacitor-run" configuration. In conventional capacitor-start motors, the start winding is connected in series with a starting capacitor and a centrifugal or thermal switch across the input terminals. The run winding is connected in parallel with this series-connected starting circuit. In such capacitor start motors, the starting condition is such that the instantaneous locked rotor current is high and the motor starting current demand factor also is high. Such motors undergo relatively high operating temperatures and require some type of mechanical switch (such as a centrifugal or thermal switch) for disconnecting or opening the starting winding circuit after a pre-established rotational speed of the rotor is reached. The starting winding in such capacitor start motors typically is wound with relatively fine or small diameter wire compared to the wire used in the run winding. Because small, gauge fine wire is used in the starting winding, such motors have a relatively limited life due to burn-out of the start winding.

In addition, the requirement for the cut-out switch in series with the start winding and start capacitor results in additional complexity, cost, and potential for failure of such motors. For example, if a centrifugal switch is employed, the switch contact necessarily must be built into the circuit, as well as the interconnections of the mechanical centrifugal switch parts with the shaft of the rotor. Such parts are subject to failure and in fact do fail.

DE-C-214062 describes a known motor substantially in accordance with the pre-characterising part of claim 1.

It is desirable to provide an electric motor operated from single phase operating current power which employs start windings and run windings electrically displaced in the stator by 90° without disconnecting the starting winding when the motor reaches its running condition of operation.

Accordingly, it is an object of this invention to provide an improved alternating current motor. This object is achieved with a motor according to Claim 1.

The parallel resonant LC circuit, utilizing a capacitor across the start winding of a single phase alternating current motor, produces electrical phase displacement between the start winding and run winding of such motor.

A single phase electric motor in accordance with the invention is capable of using the same wire size for the start winding and run winding.

A feature of this invention is the provision a single phase motor comprising two series-connected windings displaced electrically out of phase in the stator core by 90° a capacitor connected in parallel with one of the windings, whereupon the one winding and the capacitor have values selected to develop inductance and capacitance near or at parallel resonance at the operating frequency of the motor.

In accordance with a preferred embodiment of this invention, an alternating current motor operated from a source of single phase alternating current power includes a start winding connected in parallel with a capacitor to form a variable motor inductance-capacitance LC resonant circuit at the frequency of the power supplied by a source. This parallel connection of the start winding which controls resultant motor current across the power supply terminals. The result is that the current through the two windings is at substantially near or at 90° phase displacement during both starting and running conditions of operation of the motor. For increased starting torque a second capacitor may be connected in parallel with the first may be connected in parallel with the first capacitor during start-up of the motor only.

Brief Description of the Drawing

Figure I is a schematic diagram of a prior art capacitor-start motor;

Figure 2 is a schematic diagram of a prior art capacitor-start capacitor-run single phase electric motor;

Figure 3 is a schematic diagram of a preferred embodiment of the invention;

Figures 4A through 4C are vector diagrams of operating conditions of the motor shown in Figure 3;

Figure 5 is a curve illustrating the relative starting and running torques of the motor of Figure 3;

Figure 6 through II illustrated other embodiments of the invention;

Figure I2 through I4 are vector diagrams of operating conditions of the motor of Figure II;

Figure I5 is a schematic diagram of a preferred embodiment of a motor according to the invention;

Figures I6A through I6C are vector diagrams of operating conditions of the motor shown in Figure I5;

Figure I7 is a curve illustrating the relative starting and running torque of the motor of Figure I5;

Figures I8 through 2I are schematic diagrams of other embodiments of motors according to the invention; and

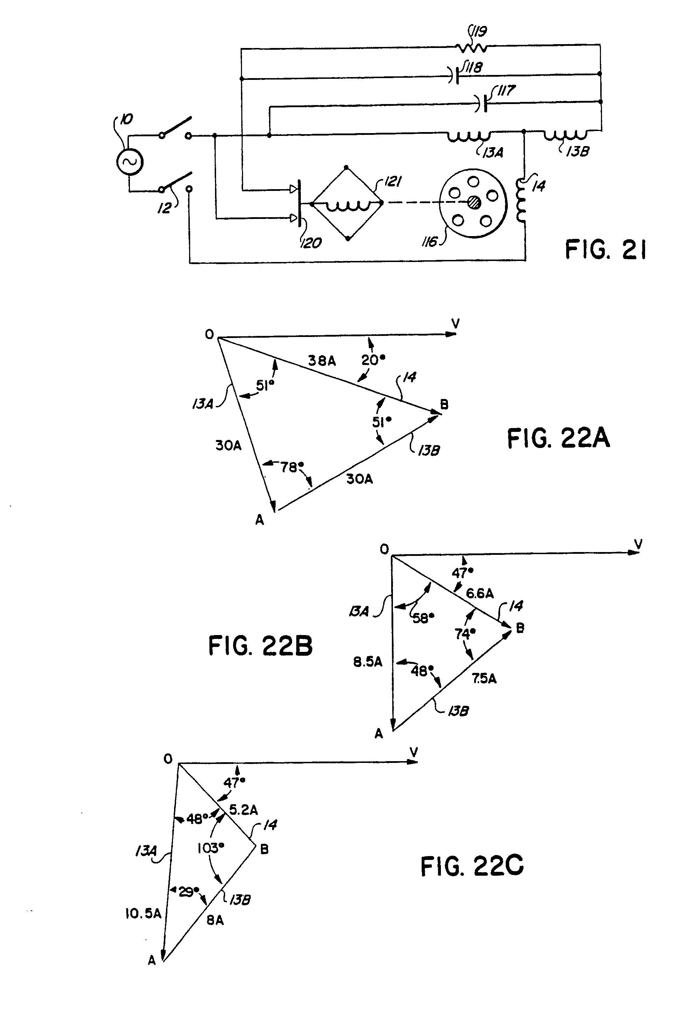

Figures 22A through 22C are vector diagrams of operating conditions of the motor shown in Figure 2I.

## Detailed Description

Refernce now should be made to the drawings, where the same reference numbers are used in the different figures to designate the same or similar components.

Figures I and 2 are schematic representations of conventional prior art single phase capacitor-start and capacitor-start/capacitor-run electric motors. The motor of Figure I is made to be connected with a suitable source of single phase alternating current power I0 (typically 60 Hz II0 volt power) through a double-pole single-throw switch I2. The motor comprises a start winding I3 and a run winding I4 wound on a suitable stator frame to effect the rotation of a rotor 20 in a conventional manner. The start winding I3 is connected in series with a start capacitor I6 and a switch 2I across the terminals of the switch I2. The run winding I4 is connected across the switch I2 also, causing it to be in parallel with the series-connected circuit of the start winding I3, capacitor I6, and switch 2I. Typically, the switch 2I is a centrifugally operated switch, or the like; so that when the motor is in its stopped or non-running condition the switch 2I is closed. When the contacts I2 are closed to apply power from the source I0 to the motor, power initially flows through the capacitor I6 and the start winding I3 through the switch 2I to apply an out of phase starting current to the rotor 20 with respect to the run winding I4. The start winding I3 is made of relatively fine or small diameter wire compared to the wire used for the run winding I4. A relatively high starting voltage drop occurs across the winding I3, and relatively high capacitor current flows through the series-connected capacitor I6 and winding I3 during the start-up time. A fairly rapid temperature rise also takes place through the winding I3; so that if, for some reason, the rotor 20 does not attain operating speed quickly, damage to the starting winding I3 may occur. In extreme cases the motor may burn out. Under normal conditions of operation, however, the rotor 20 relatively quickly comes up to speed, causing the centrifugal switch 2I to open. When this occurs, all of the current for maintaining the running of the motor passes through the run winding I4, since the start winding I3 and the capacitor I6 are switched out of the circuit when the switch 2I opens.

A variation of the prior art motor of Figure I is shown in Figure 2. In the motor of Figure 2, a pair of series-connected run windings I4A and I4B are connected across the terminals of the switch I2. In addition, a run capacitor 25 (having a lower capacitance than capacitor I6) is connected in shunt or parallel across the switch 2I and capacitor I6. The start-up conditions for the motor of Figure 2 are the same as for Figure I. Upon attainment of desired operating speed, however, when the switch 2I opens, current still flows through the series-connected start winding I3 and capacitor 25 during normal operating conditions of the motor. This current is out of phase with that flowing through the run windings I4A and I4B.

The operation of the motor of Figure 2 is well known and need not be discussed further here. It should be noted, however, that the disadvantages of the starting conditons which exist with respect to the capacitor-start motor of Figure I still are present with the motor of Figure 2. The start winding I3 is typically wound with wire which is of smaller diameter than used in the run windings I4A and I4B. The disadvantages of the prior art motor of Figure I with respect to operating voltage, high temperature, and high current also are present with the prior art capacitor-start/capacitor-run motor shown in Figure 2.

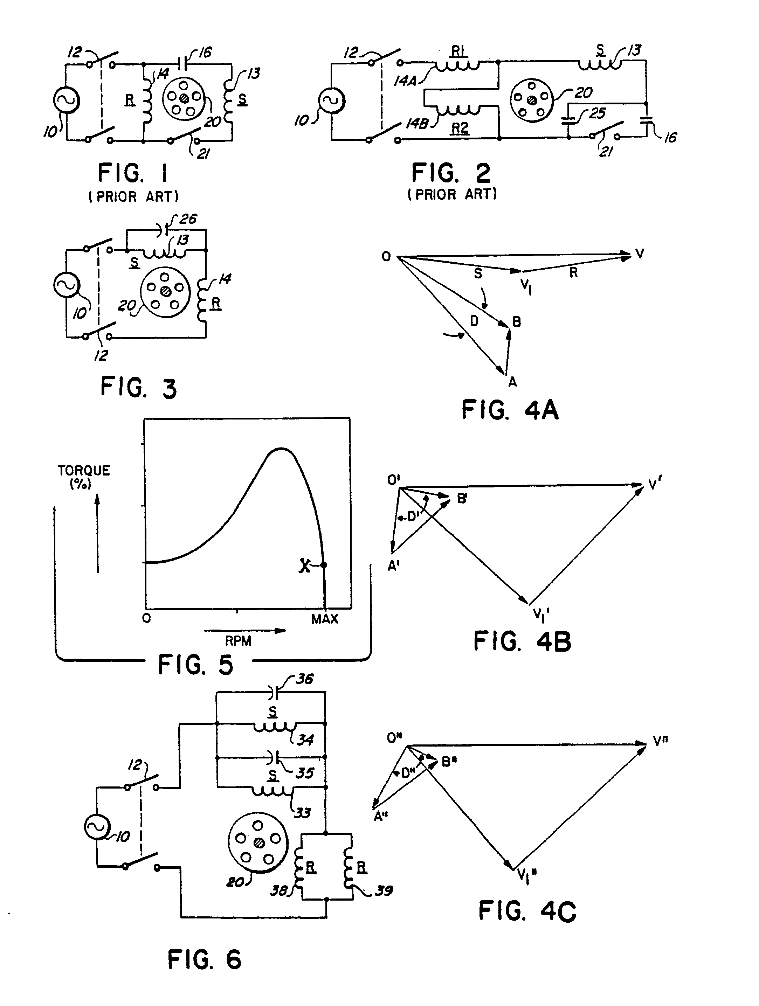

Figure 3 is a schematic diagram of a preferred embodiment two-phase capacitor motor adapted to be operated from a single phase alternating current source which has the advantages of a capacitor start motor, but without the necessity of the additional mechanically operated switch 2I and without the disadvantages of high voltage, high current, and high resistance which are present in the prior art motors of the type showing in Figure I and Figure 2. In place of connecting the start capacitor in series with the start winding, the start winding I3 is connected in parallel with a capacitor 26. This forms a parallel resonant circuit, the resonance of which is selected to be at or near the 60 Hz frequency of the power supply I0.

Obviously, if power supplies of different frequencies, such as 50 Hz or 120 Hz are used, the resonance of the LC parallel resonant circuit, consisting of the winding 13 and capacitor 26, is selected to match the frequency of the source 10. The capacitor 26 is an alternating current non-polarized capacitor, and may be an electrolytic capacitor.

The start winding 13 and the run winding 14 of the motor shown in Figure 3 are wound on the stator core (not shown) and are electrically displaced in phase by 90°. The run winding 14 is connected in series circuit with the parallel resonant circuit, consisting of the start winding 13 and the capacitor 26, directly across the terminals of the switch 12. The start winding 13 is dephased from the run winding 14 by 90° electrical phase displacement as a result of the capacitor 26. This causes the current through the winding 13 to be a lagging current while the current through the second phase winding 14 is controlled at or near unity power factor at the voltage across the winding 14. The parallel resonant circut, including the start winding 13, also permits the wire used in the start winding 13 to be of the same relatively large gauge or diameter as the wire used in the run winding 14. Consequently, the risk of burning out or overheating the start winding 13 which is present in prior art capacitor start motors, is not present with the motor shown in Figure 3.

It also should be noted that the configuration illustrated in Figure 3 may be used with motors having rotors in various configurations. For example, the rotor 20 may be a squirrel cage rotor, a high resistance rotor, a low resistance rotor, a wound rotor, or a multiple two-winding high and low resistance rotor. The parallel resonant start winding in series with the run winding configuration for the stator which is shown in Figure 3 is capable of use with motors of a number of otherwise standard constructions.

The motor in Figure 3 typically is used in applications which do not require a very high starting torque, such as pumps, blowers, machine tools and many commercial and domestic applicances. The motor of Figure 3 consumes less electrical energy, has a lower starting current, and a lower motor running current than the motors of the prior art shown in Figures 1 and 2. As the capacitance of the capacitor 26 is increased, the power and starting and running torque of the motor is increased, until the flux density 13 and 14 of the stator core and windings nears saturations. In addition, the motor of Figure 3 operates at very high efficiency near unity power factor (or substantially at unity power factor). The motor also may be adapted for different motor speeds such as two-pole 3450 rpm, four-pole 1750 rpm, six-pole 1100 rpm, et cetera.

Figures 4A through 4C illustrate respectively the vector diagrams for the motor of Figure 3 at start, full load, and no load conditions of operation. In Figure 4A, the motor starting condition, the vector voltage from 0 to V is a single phase line reference voltage. The voltage from 0 to $V_1$ is the first phase voltage, (the voltage across winding 13), and the second phase voltage (that across the winding 14) is from vector VI to V. The capacitor current through the capacitor 26 leads the voltage V by approximately 90°. This is apparent from an examination of the lower portion of the vector diagram of Figure 4A. The current through the first phase (the start winding 13) is illustrated from 0 to A. The capacitor current vector is from A to B (leading the voltage vector, 0 to V, by approximately 90°). Consequently, the resultant current vector is from 0 to B, which is the current through the run winding 14 or second phase, constituting the vector sum total current drawn from the single phase power source at the motor starting conditions. As is apparent from a subsequent comparison of Figure 4A with Figures 4B and 4C, this starting current is higher than the full load and no load current, but still is a relatively low current in comparison with prior art motors of the type shown in Figures 1 and 2.

It may be seen in Figure 4A that the current vectors of 0 to A and A to B, develop the resultant current vector B to 0. The phase displacement of this vector (Angle D) is the dephased amperes of the motor at the instant starting condition. The Angle D may be in the vicinity of 5° to 90° for dephasing the current at motor starting condition.

Figure 4B illustrates the vectors (voltage and current) for the motor of Figure 3 operating at full load condition. The vector from 0' to V' is the voltage reference vector single phase power available from the source 10. The voltage vector from 0' to $V_1$' is the first phase voltage of the start winding 13, and the second phase voltage of the run winding 14 is from $V_1$' to V'.

The current vector under full load conditions of operation (Figure 4B) are shown in the resultant vector from 0' to B'. This is the resultant of the vector sum current of the first phase vector 0' to A' and the capacitor current vector A' to B'. The Angle D' is the current phase displacement of the motor full load running condition. This angle, at full load operating conditions, is approximately 90°.

Figure 4C shows the voltage and current vectors of the motor of Figure 3 operating at no load. Under this condition of operation, parallel resonance of the winding 13 and capacitor 26 takes place, where the capacitor current and the winding current through the winding 13 is relatively high, while the current through the winding 14, the run winding, is comparatively low. The voltage vectors 0" to $V_1$" through the winding 13, and the voltage vector $V_1$" to V" of the second phase through the run winding 14, create the resultant vector 0" to V". A considerable difference in the current vector from the full load condition shown in Figure 4B is apparent. The current vector of the winding I3, 0" to A" and the current vector of the capacitor 26 A" to B" are approximately equal; but because of the parallel resonance of the winding I3 and the capacitor 26, the current vector 0" to B" through the second phase run winding I4 is quite short.

An actual motor, modified to have the winding configuration illustrated in Figure 3 and from which the information providing the basis for the vector diagrams of Figures 4A through 4C, was constructed. The motor was a standard General Electric motor, Frame I82, Model No. 5KSI82AC287. This was a one horsepower motor, I7I5 rpm, 208 volts, 7.2 amperes. The stator was rewound in accordance with the configuration of Figure 3 with a #I6 wire for both windings I3 and I4, and a parallel resonant circuit was produced by adding the capacitor 26; so that the electrical configuration of the stator was in accordance with the embodiment of Figure 3. The run winding had a greater turn ratio with respect to the start winding. The table reproduced below indicates measurements which were taken at start, full load, and no load conditions of operation (allowing approximately 2% to 5% ± meter accuracy readings).

## TABLE I

| | Single Phase Power Input | | First Phase (Winding 13) | | Second Phase (Winding 14) | | Capacitor (26) 200 MFD | |
|---|---|---|---|---|---|---|---|---|
| Start Peak A* | 13 | A : | 22 | A : | 18 | A : | 7.5 | A |
| Run A | 5 | A : | 8.3 | A : | 5 | A : | 10 | A |
| No Load A | 2.5 | A : | 10 | A : | 2.5 | A : | 12 | A |
| Start V* | 230 | V : | 80 | V : | 150 | V : | 80 | V |
| Run V | 240 | V : | 150 | V : | 220 | V : | 150 | V |
| No Load Volts | 240 | V : | 160 | V : | 220 | V : | 160 | V |
| PF* Start | 85 | % : | 80 | % : | 80 | % : | 0 | |
| PF Run | 97.5 | % : | 10 | % : | 95 | % : | 0 | |
| PF No Load | 80 | % : | 10 | % : | 100 | % : | 0 | |

Key:   A* — Amperes
       V* — Volts
       PF* — Power Factor

From the measured currents of the motors shown in the above table, the Angle D (Figure 4A) for the dephasing of the starting current equals approximately I9°. For the run condition the Angle D' of Figure 4B is approximately 86°, while the Angle D" (Figure 4C) at the no load running condition is approximately 38°. Because of the possibility of instrument readings which varied approximately 2% to 5%, these angles also vary somewhat. The relative angles, however are as shown in Figure 4A, B, and C, and as indicated above. At starting conditions, the above motor developed approximately 3.0 ft.lbs. of starting torque. At I740 rpm and 5 amperes power input, the motor pulling or breakdown torque reached 8.75 ft.lbs. As noted from the above table, the motor operating at full load and at I740 rpm produced a torque of 3 ft.lbs. on 5 amperes of current for the full one horsepower motor output. The motor as originally designed draws 7.2 amperes for its full one horsepower output, so that the modified winding configuration of Figure 3 results in significantly higher efficiency.

Figure 5 is an output curve of the increasing rpm from zero to maximum (I740 rpm) versus torque of the motor shown in Figure 3 and having the characteristic illustrated in the above table. The "X" on Figure 5 indicates the relative torque at full load operating conditions. The maximum rpm is shown for the no load condition.

Figures 6 through I0 illustrate variations in start and run winding configurations which employ the same principles of the embodiment shown in Figure 3. For example, Figure 6 illustrates the use of parallel start windings 33 and 34, having corresponding parallel capacitors 35 and 36 connected across them. The parallel winding/capacitor configuration then is connected in series with a pair of parallel-connected run windings 38 and 39. The performance and operating characteristrics of the motor shown in Figure 6 are similar to those of the motor of Figure 3, but the motor of Figure 6 is capable of operating at lower voltage than the motor of Figure 3.

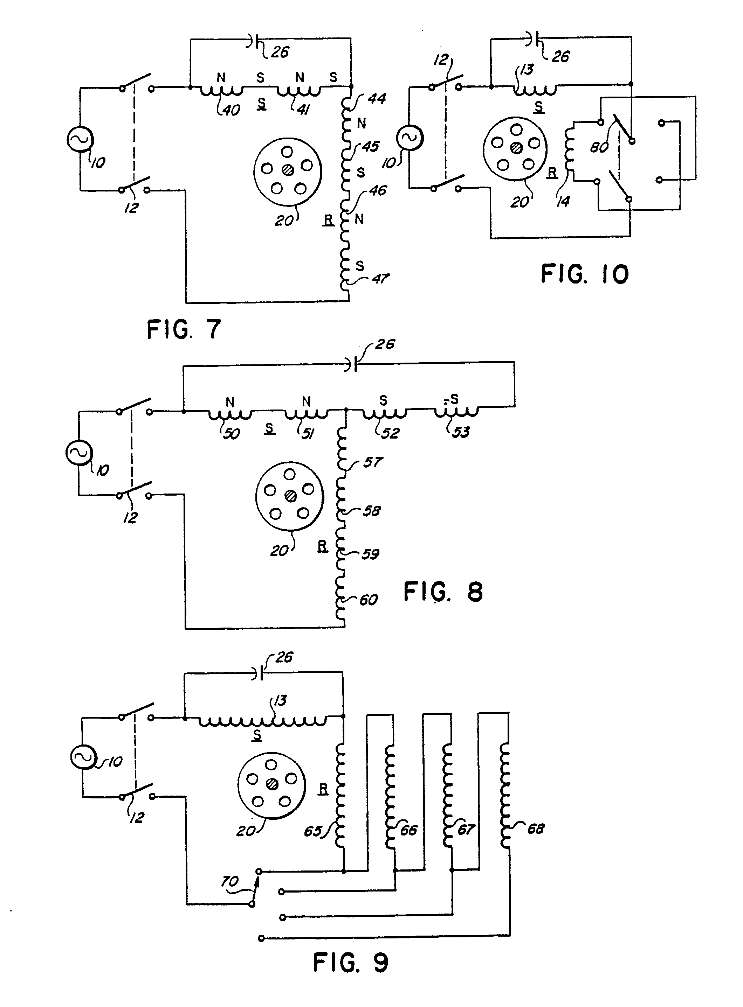

Figure 7 illustrates another variation of stator windings in which the stator core is wound in what is termed a "consequent pole" arrangement. In this arrangement, the first phase or start winding constitutes a pair of series-connected windings 40 and 41 wound to develop the north pole connections internally in the stator all facing the same direction. The capacitor 26 is connected across the series-connected windings 40 and 41 and produces the desired parallel resonance at motor no load running conditions. Similarly, the run winding is made up of four series-connected windings 44, 45, 46, and 47, which are wound to produce alternate magnetic polarities as indicated in Figure 7. Consequent pole motors are known; and the invention, illustrated in its basic form in Figure 3, may be applied to these motors as well as to the basic motor of Figure 3. The wire sizes or wire gauge of the motor winding 40, 41, 44, 45, 46 and 47 are the same; and the return ratios may be equal or unequal with respect to the start windings 40, 41, and the run windings 44, 45, 46, and 47.

Figure 8 illustrates another arrangement with which the invention may be used. The first or start winding comprises of four series-connected windings 50, 51, 52, and 53, with the connection between the windings 51 and 52 comprising a center tap to which four series-connected run windings 57, 58, 59, and 60 are connected. The capacitor 26 forms a parallel resonant circuit across all four of the start windings 50 through 53. The primary object of the circuit arrangement of Figure 8 is to increase the capacitor voltage and to use a smaller capacitance for the capacitor 26. The motor also produces a higher voltage and increased starting torque, increased pull-in torque, and increased motor full-load operating torque. The version of Figure 8 is used for applications where a higher starting torque is required and where the starting torque of the motor configuration of Figure 3 would be insufficient.

Figure 9 illustrates a multiple speed motor in which the run winding comprises four series-connected windings 65 through 68, the junctures between each of which are connected to one terminal of a rotary switch 70, the other terminal of which is connected to the lower terminal of the switch 12. The moving contact of the switch 70 then may be connected to any one of the four windings to connect any number of them (from one to four) in series with one another and with the power supply supplied through the switch 12. The start winding 13 and the parallel-connected capacitor 26 are the same for the motor shown in Figure 9 as for the motor described previously in conjunction with Figure 3. By making the connection through the switch 70 at any one of the four different positions, the motor may be operated at any one of four different speeds. The windings 65, 66, 67, and 68 typically are wound with different size of gauges of wire, each with the same polarity. A motor of the type shown in Figure 9 typically is used for a fan air conditioning motor, such as a 115 volt six-pole 1100 rpm motor which, by changing the position of the switch 70, increases impedance to cause it to operate as low as 600 rpm.

Figure 10 is a variation of the motor shown in Figure 3 which illustrated the manner in which the motor can be operated to instantly reverse direction of rotation of the rotor 20. To accomplish this, a double-pole, double-throw switch 80 is used to interconnect the lower terminal of the switch 12 and the junction of the parallel-connected start winding 13 and capacitor 26 with the ends of the run winding 14. In one switch position, the connections are the same as shown in Figure 3. In the opposite switch position (to the right in Figure 10) that the currentflow through the winding 14 is reversed 180° from that of Figure 3; and the rotor 20 rotates in the opposite direction. Since there is no centrifugal switch or other mechanical apparatus used in the motor of Figure 10, instant reversal or quick reversal of the direction of the rotor 20 may be effected. The switch 80 may be thrown from one position to the other, even while the motor is energized and operating at its maximum rpm. The motor will instantly reverse direction under either no load or full load conditions. This is to be contrasted with a conventional capacitor start motor in which the centrifugal switch (such as the switch 21 of Figure 1) is employed. In such conventional motors, the motor must be brought to a full stop before reversing the direction of its operation. That is not necessary with the motor shown in figure 10.

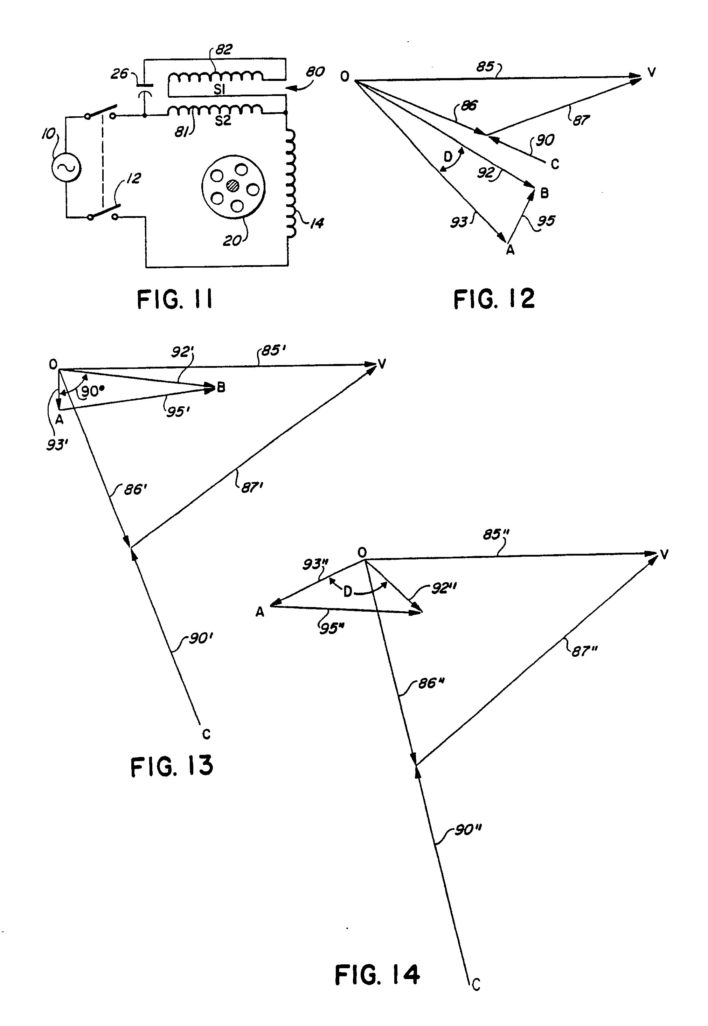

Figure 11 illustrates another embodiment which permits a reduction in the size of the capacitor 26 from the embodiments. In Figure 11, the start winding is split into two parts to form the primary winding 81 and the secondary winding 82, respectively, of a transformer 80. The capacitor 26 forms a parallel resonant circuit across both the primary and secondary windings 81 and 82. So far as the capacitor 26 is concerned, the windings 81 and 82 are connected in series. They are wound, however, with two wires or two separate insulated coils coinciding with one another in the stator core in the same slots. A center tap between the windings 81 and 82 is connected to one end of the run winding 14, the other end of which is connected to the opposite pole of the switch 12 in a manner similar to the connections of the windings of the embodiment of Figure 8.

In the operation of the circuit shown in Figure 11, a maximum Counter-Electro Magnetic Force (CEMF) is generated in the transformer windings 81 and 82 as an additive or cumulative voltage. As a consequence the voltage across the capacitor 26 is a higher voltage than for the embodiments described above in conjunction with Figure 3, 6, and 7 through l0. The voltage across the capacitor appears to be l80° out of phase with the voltage across the windings 8l and 82 of the transformer 80. Since a higher voltage appears across the capacitor 26, lower cost, standard, high voltage capacitors may be used for the capacitor 26.

It is desirable to have an equal number of stator slots for distribution of the two windings 8l and 82, so that the voltages are balanced. The motor stator slots in many motors, however, are unbalanced in a ratio which causes the distribution also to be unbalanced. As a consequence, with such motors, unbalanced voltages occur in the windings 8l and 82. Even so, the advantages of the transformer-coupled embodiment of Figure ll, permitting the use of standard high-voltage capacitors for the capacitor 26 still are realized.

A motor having the configuration shown in Figure ll employs a reduced size of capacitor for the capacitor 26 and is smaller in size than a standard motor producing the same amount of power. The configuration of Figure ll produces increased efficiency, and the motor develops moderate starting torque at low starting and running current. Such a motor develops what may be termed a "soft" motor starting torque. As a consequence, a motor configured in accordance with the embodiment shown in Figure ll is ideal for applications where the source of power is a portable alternator or portable alternating current generator where a limited amount of motor starting current is desirable. Motors can be operated from a small output AC generator if the slow starting and running current is required. Conventional capacitor start motors cannot be used with such small portable generators because such conventional motors require high motor starting current.

Reference now should be made to Figures l2 through l4 which illustrate, respectively, the vector diagrams for the motor of Figure ll at start, full load, and no load conditions of operation. In Figure l2, the motor starting condition, the vector voltage from 0 to V, line 85, is the line voltage. Vector 86 and 90 represent respectively the voltage vectors for the primary winding 8l and the secondary winding 82. The vector 87 is the voltage across the run winding l4. The voltage across the secondary winding 82, and therefore across the capacitor 26, is l80° out of phase with the voltage across the primary winding 8l, as indicated by the voltage vector 86 for the winding 8l.

The current through the winding l is shown by the vector 93. The capacitor current vector is illustrated in Figure l2 by the vector 95; and the resultant current vector 92 is the current through the run winding l4, constituting the vector sum total current drawn from the single phase power source at the motor starting conditions. As is apparent from a comparison of the starting conditions shown in Figure l2 with the run and the no load conditions illustrated in Figures l3 and l4, the starting current shown by the vector 92 is higher than the full load and no load currents illustrated by the vectors 92′ and 92″, but still is a relatively low current in comparison with prior art motors of the type shown in Figures l and 2.

The vectors shown in Figure l3 for the full load condition are provided with the same numbers primed (′) and the vectors for the motor of Figure ll operated at no load conditions are indicated by double primed (″) indications for comparison of the various vectors of Figures l2, l3, and l4.

An actual motor, modified to have the winding configuration illustrated in Figure ll and from which the information providing the basis for the vector diagrams of Figure l2, l3, and l4 was obtained, has been constructed. The motor was a standard Leland Faraday motor, Frame l45T, Serial No. 38J50-7ll0. The motor specification were l.5 horsepower, l725 rpm, ll5/230 volts, 9.5 amperes as manufactured. The stator was rewound in accordance with the configuration of Figure ll to cause the primary winding 8l and the secondary winding 82 to be placed in the same stator core slots. The wire size was selected to provide a sufficient safety factor for the current drawn through each winding as indicated in TABLE ll below. In addition to the modification to form the transformer 80, a capacitor 26 was added and interconnected as illustrated in Figure ll. TABLE ll indicates the actual measurements which were taken at start, full load, and no load conditions of operations (Figures l2, l3, and l4 respectively), allowing approximately 2% to 5% ± meter accuracy readings:

EP 0 243 154 B1

TABLE II

|  | Single Phase Power Input | | Winding 81 | | Winding 82 | | Capacitor 26 | | Winding 14 | |
|---|---|---|---|---|---|---|---|---|---|---|
| Start Peak A* | 17 | A : | 18 | A : | 5.5 | A : | 5.5 | A : | 17 | A |
| Run A | 7.5 | A : | 3 | A : | 8 | A : | 8 | A : | 7.5 | A |
| No Load A | 4.6 | A : | 5.8 | A : | 9.5 | A : | 9.5 | A : | 4.6 | A |
|  |  | : |  | : |  | : |  | : |  |  |
| Start V* | 240 | V : | 110 | V : | 45 | V : | 155 | V : | 145 | V |
| Run V | 240 | V : | 145 | V : | 145 | V : | 290 | V : | 240 | V |
| No Load Volts | 240 | V : | 160 | V : | 160 | V : | 320 | V : | 250 | V |
|  |  | : |  | : |  | : |  | : |  |  |
| PF* Start | 88 | % : | 90 | % : | 1 | % : | 1 | % : | 75 | % |
| PF Run | 98 | % : | 82 | % : | 1 | % : | 1 | % : | 98 | % |
| PF No Load | 76 | % : | 20 | % : | 1 | % : | 1 | % : | 90 | % |

Key:  A* — Amperes
      V* — Volts
      PF* — Power Factor

This motor, with the operating characteristics shown above in TABLE II, developed a starting torque of 3.0 ft.lbs., a full load torque of 4.5 ft.lbs., and a breakdown torque of approximately 8.0 ft.lbs. or slightly greater. As is apparent from TABLE II the motor starting and running current was low. The running current of 7.5 amperes at full load, 1740 rpm, is signficantly lower than the 9.5 amperes for the same motor wound in a conventional manner. Consequently, the modified winding configuration of Figure 11 results in significantly higher efficiency for this motor.

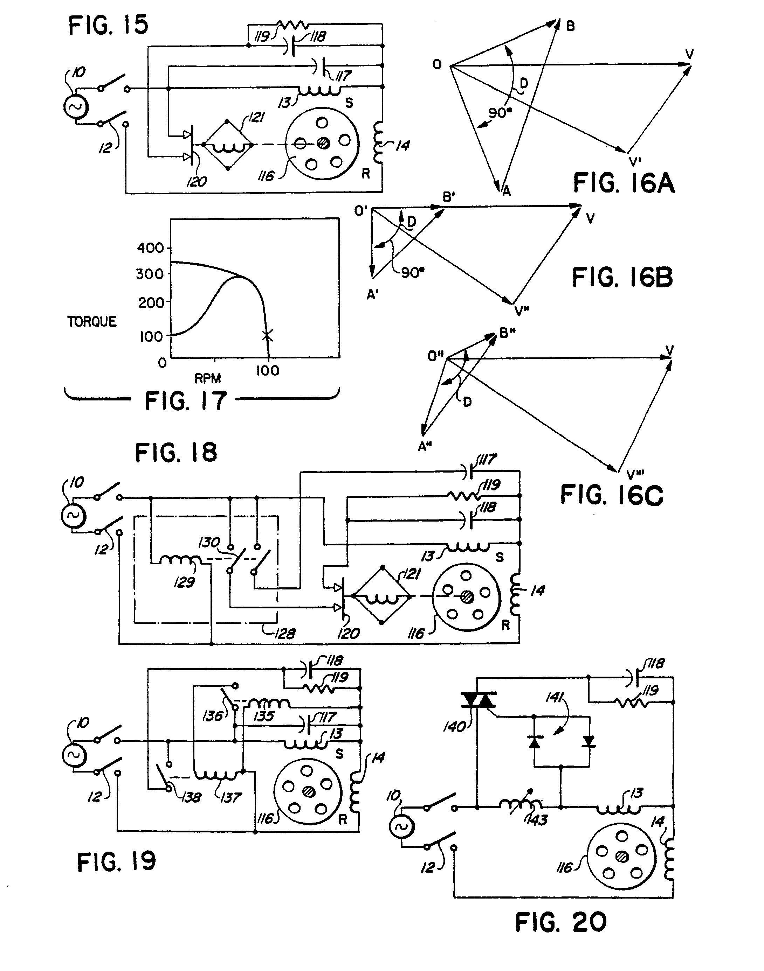

Figure 15 is a schematic diagram of a two-phase capacitor motor, adapted to be operated from a single phase alternating current source and which incorporates the principles of another embodiment of the invention. The motor shown in Figure 15 employs an LC resonant circuit of the type disclosed in Figure 3. The motor of Figure 15, however, also functions to develop substantially higher starting torque than the motors of Figures 3 through 14. In order to increase the starting torque, a second capacitor 118 (a non-polarized AC electrolytic type) is connected in parallel with the capacitor 117 through the contacts of a starting switch 120. The results of the second capacitor 118 in parallel circuit with the capacitor 117 is to cause the phase displacement of the currents through the windings 13 and 14 to be in the vicinity of 90° phase displacement during motor starting conditions. In addition, the overall current demand of the motor at start-up is greater than that with the motor of my co-pending application. Once the motor attains or approaches its normal operating speed, a centrifugal switch 121 coupled to the rotor 116 opens the contacts 120 and removes the capacitor 118 from the circuit. An energy dissipating resistor 119 is connected across the capacitor 118 for the purpose of dissipating any energy stored in the capacitor 118 at the time the switch 120 opens.

Figures 16A through 16C illustrate, respectively, the vector diagrams for the motor of Figure 15 at start, full load, and no load conditions of operation. In figure 16A, the motor starting condition, the vector voltage from zero to V is a single phase line reference voltage. The voltage from zero to V' is the first phase voltage (the voltage in winding 13), and the second phase voltage (the voltage across the winding 14) is from the vector V' to V.

The current vectors, at motor start-up are dephased or out-of-phase by approximately 90° to produce a high starting torque. This dephasing is a result of the combined capacitance of capacitors 117 and 118. The relative capacitance of the capacitors 117 and 118 is such that the capacitance of the start capacitor 118 is considerably higher than the capacitance of the capacitor 117. In a typical motor of the type shown in Figure 15, the capacitor 117 may have a capacitance of 100 microfarads and the capacitor 118 may have a capacitance of 400 microfarads. The composite effect of this capacitance upon the starting current is illustrated in Figure 16A.

The starting current through the first phase winding (the starting winding 13) is illustrated in Figure 16A

8

as from zero to A. The composite capacitor current vector at start, which is the result of the capacitances of both capacitors 117 and 118, is from A to B (leading the voltage vector zero to V′ by approximately 90°). Therefore, the resultant current vector through the second phase winding (the run winding 14) is from zero to B. This resultant current vector constitutes the sum total of the current drawn from the single phase power source 10 during the motor starting conditions. This phase displacement of the current vectors develops high motor starting torque. As is apparent from a subsequent comparison of Figure 16A with Figures 16B and 16C, this starting current is higher than the full load and no load currents, but it still is a relatively low current in comparison with prior art motors not employing the parallel resonant circuit formed by the winding 13 and the capacitor 117.

Figure 16B illustrates the voltage and current vectors for the motor of Figure 15 operating at full load conditions. As described previously, under full load conditions, the switch 120 is opened and the capacitor 118 no longer is connected in the circuit. Consequently, the capacitor 117 is the only capacitor in parallel with the first phase winding 13 to form the parallel resonant LC circuit during normal full load operating conditions. The vector from O′ to V is the voltage reference vector single phase power available from the source 10. The voltage vector from O′ to V″ is the first phase voltage of the winding 13, and the second phase voltage of the winding 14 is from V″ to V.

The current vectors under full load conditions of operation, as illustrated in Figure 16B, are shown in the resultant vector from O′ to B″. This is a resultant of the vector sum current of the first phase current vector O′ to A′ and the capacitor current vector A′ to B′. It may be seen that the vector 0′ to B′ is relatively short (low current) and is at or near unity power factor, resulting in high efficiency. The angle D (90°) is the phase displacement of the current vectors during motor full load running condition. As is apparent from an examination of Figures 16A and 16B, the phase displacement of the current vector is substantially 90° both during starting and during full load operating conditions. Under full load operating conditions, with the capacitor 118 disconnected, the operation of the motor of Figure 15 essentially is the same as the motor of Figure 3.

Figure 16C shows the voltage and current vectors of the motor of Figure 15 operating at no load. Under this condition of operation, the switch 120 is open and the capacitor 118 is not in the circuit. Parallel resonance of the winding 13 and the capacitor 117 takes place; so that the capacitor current and the winding current through the winding 13 is relatively high, while the current through the winding 14, which may be considered the run winding, is relatively low. The voltage vectors O‴ to V‴ through the winding 13, and the voltage vector V‴ to V through the second phase winding 14 create the resultant vector O″ to V. A considerable difference in the current vectors from the full load condition shown in Figure 16B is apparent. The current vector of the winding 13, O″ to A″ and the current vector of the capacitor 117 A″ to B″ are fairly large; but because of the parallel resonance of the winding 13 and the capacitor 117, the current vector 0″ to B″, through the second phase or run winding 14, is quite short.

An actual motor modified to have the winding configuration illustrated in Figure 15 and from which the information providing the basis for the vector diagrams of Figures 16A through 16C was constructed. The motor was a standard General Electric motor, Frame 182, Model No. 5KSI82AC287. This was a one horsepower motor, 1715 rpm, 208 volts, 7.2 amps. The stator was rewound in accordance with the configuration of Figure 15, with No. 16 wire for both windings 13 and 14. In addition, the winding which was used as the run winding in the original motor was employed as the start winding 13 and the rewound start winding was used as the run winding 14. Since the windings are of the same gauge wire, this can be accomplished. The run winding 14 had a greater turns ratio with respect to the start winding 13. The table reproduced below indicates measurements which were taken at start, full load, and no load conditions of operations (allowing approximately 2% to 5% +/- accuracy readings):

## TABLE

| Single Phase Power Input | | First Phase Winding (13) | Second Phase Winding (14) | Start Cap. (118) 400 MFD | Run Cap. (117) 100 MFD | Total Run-Start Cap. |
|---|---|---|---|---|---|---|
| Start Peak/*A | 23 A | 25 A | 23 A | 27.0 A | 7.5 A | 34.5 A |
| Run A | 5.5 A | 4 A | 5.5 A | 0 | 7.5 A | 7.5 A |
| No Load A | 3.6 A | 5.5 A | 3.6 A | 0 | 8.5 A | 8.5 A |
| Start *V | 225 V | 200 V | 100 V | 200 V | 200 V | 200 V |
| Run V | 230 V | 200 V | 130 V | 0 | 200 V | 200 V |
| No Load V | 230 V | 220 V | 130 V | 0 | 220 V | 220 V |
| *PF Start | 93% | 72% | 80% | 0 | 0 | 0 |
| PF Run | 80% | 55% | 95% | 0 | 0 | 0 |
| PF No Load | 36% | 5% | 100% | 0 | 0 | 0 |

Key: *A — Amperes
*V — Volts
*PF — Power Factor

From the measured currents of the motor shown in the above table, the Angle D (Figure 16A) for the dephasing of the starting currents equals approximately 90°. This phase displacement develops a very high motor starting torque for the motor. In addition, for the run condition (full load) it may be seen that the Angle D also is approximately 90°. The result is that the resultant current vector O' to B' is relatively low and that the current is at or near unity power factor as drawn from the single phase source of power. This results in high efficiency of operation.

At starting conditions, the motor of the above table developed II ft.lbs. of starting torque. At full load or running condition, the motor developed one horsepower at 3 ft.lbs. of torque at 5.5 amperes of current at I740 rpm. The breakdown torque from the motor full load to stalling is in the vicinity of 8.5 ft.lbs. The motor, as originally designed, draws 7.2 amperes for its I horsepower output; so that the modified winding configuration employing the parallel resonance combination of the capacitor II7 and the winding I3 results in significantly higher efficiency during the full load or running condition of operation of the motor.

Figure I7 is an output curve of the increasing rpm from 0 to maximum (I740 rpm) versus torque of the motor shown in Figure I5 and having the characteristics illustrated in the above table. The "X" on figure I7 indicates the relative torque at full load operating conditions. The maximum rpm is shown for the no load condition. The lower curve in Figure I7 illustrates the effect on the rpm versus torque which is contributed by the parallel resonant circuit of the capacitor II7 and the winding I3. The upper curve is the composite effect which is provided by the addition of the starting capacitor II8. As is readily apparent, the upper or composite curve provides a very high starting torque at low rpms. To achieve the efficiency of continuous operation from the LC resonant circuit, once motor start-up has been attained, the capacitor II8 is disconnected or removed from the circuit; and the remainder of the curve of Figure I7 then is resonant circuit comprising the winding I3 and the capacitor II7.

Figure I8 through 2I illustrate other circuit configurations which employ the same principles of the embodiment of the invention shown in Figure I5, but which employ different circuitry or which add other characteristics to the embodiment which has been described. For example, Figure I8 adds an additional feature of power relay I28 to the circuit of Figure I5 for the purpose of eliminating the effect of the capacitor voltage discharge CEMF (Counter Electromotive Force) induction from the motor upon turn-off of the motor when the switch I2 is opened. The relay I28 is connected across the terminals of the switch I2 and has a pair of contacts I30, a different one of which is connected in series with the circuit of the capacitors II7 and II8. When the switch I2 is initially closed, current flow through the operating coil I29 of the relay I28 to close the contacts I30. This provides operating current to both of the capacitors II7 and II8 (for the capacitor II8 through the closed contacts of the switch I20). The contacts I30 remain closed during the entire motor operation.

As the motor of Figure I8 is deenergized by opening the switch I2, operating current through the relay

coil 129 ceases; and the contacts 130 open. This causes the circuits for both of the capacitors 117 and 118 to be opened. This prevents the surge voltage resulting from the discharge of the capacitor 117 from being applied to the motor windings 13 and 14. As a result, unnecessary vibration of the motor at disconect, as well as the noise created by such vibration, is eliminated. In addition, the relay 128 causes elimination of the dynamic braking of the motor when the capacitors 117 and 118 are discharged at the instant of motor disconnection. As a consequence, the motor decelerates to a stop silently and without vibration. This increases the life of the motor, especially for large horsepower integral motors.

Figure 19 is another variation of the embodiment of Figure 15. In this arrangement, a voltage sensitive relay coil 135 operates to control contacts 136 for the purpose of connecting and disconnecting the starting capacitor 118 from the circuit. This operation is controlled by the voltage of the motor at its starting and running conditions. The voltage sensitive relay, comprising the coil 135 and contacts 136, is a small size relay; and the contacts 136 normally are closed when the motor is in its off condition of operation and during start-up.

The contacts 136 are connected in series with the operating coil 137 of the power relay across the input terminals controlled by the switch 12. Consequently, when the contacts 136 are closed, operating current for the coil 137 flows through those contacts from the source 10. This closes contacts 138 to connect the start capacitor 118 into the circuit. The arrangement of Figure 19 is very practical for large integral horsepower motors.

As the motor attains its run voltage, the voltage across the relay coil 135 increases; and it operates to open the contact 136. This in turn removes operating current from the coil 137; so that the contacts 138 are opened. The capacitor 118 then is disconnected from the circuit, and the motor continues operation in its run mode of operation in the same manner as described above in conjunction with Figure 15. The advantage of the circuit of Figure 19 is that the circuit suppresses the capacitor voltage discharge upon disconnection of the operating current to the motor by opening up the switch 12. No mechanical contacts of the type required for the switch 120/121 are necessary, so that increase life of the motor and the starting circuit results. The power relay 137/138 has contacts 138 capable of handling heavy high current from the capacitor 118 as it is switched into and out of the circuit.

Another embodiment which does not require a mechanical switch is illustrated in Figure 20. Only a single capacitor 118 is used in this embodiment, and the capacitor 117 has been eliminated. In Figure 20, the centrifugal switch 120/121 has been replaced with a solid state motor starting control circuit of the type disclosed in United States Patent No. 3,916,274. This circuit comprises a triac 140 connected in series with the starting capacitor 118 to function as the on/off switch in that circuit. The gate of the triac 140 is connected to a pair of parallel back-to-back diodes in a circuit 141. These diodes control the gate voltage for the triac 140 in accordance with the voltage drop across a variable inductor 143. The circuit of Figure 20 operates to connect the capacitor 118 in the circuit during the relatively high current starting conditions and operates to disconnect the capacitor 118 from the circuit during normal full load or no load operating conditions.

The capacitor 118 in the embodiment of Figure 20 is selected to form an LC parallel resonant circuit with the winding 13 during the starting phase of operation of the motor shown in Figure 20. Consequently, during motor start-up, parallel resonance continues to be employed. At the time the capacitor 118 is switched out of the circuit, operating current for the motor continues to flow through both windings 13 and 14. The windings are connected in series with the source of alternating current power 10 through the switch 12 at all times during the operation of the circuit. There is no "start-winding" which is switched out of the circuit as is common with prior art capacitor start motors.

The first winding 13 of the motor of Figure 20 has a greater number of turns than the second winding 14, with both windings using the same large wire size of low impedance. The winding 14 has about one-third or one-fourth the turn ratio of the winding 13. The motor of Figure 20 develops the same horsepower output during its running condition, with a much lower temperature rise, than comparable prior art capacitor start motors. There is no starting winding to burn out, and the motor draws a relatively low starting current.

Figure 21 illustrates another embodiment which is similar to the one of Figure 15, but in which the first phase winding 13 comprises a center tapped winding including two sections 13A and 13B. The connection between the sections 13A and 13B comprises the upper connection to the winding 14 of the motor. The capacitors 117 and 118 are connected in parallel with both sections 13A and 13B of the start winding to form a parallel resonant circuit with both winding sections. The nature of the current flow through the windings 13A and 13B and the capacitors 117 and 118 is such that the capacitors 117 and 118 also are connected in electrical series with the winding section 13B and the winding 14. This assists in utilizing the capacitor leading current for increased starting torque in conjunction with the winding section 13B.

The operation of the circuit of Figure 21, is otherwise the same as in Figure 15. The circuit of Figure 21, however, produces an even higher starting torque and motor pull-in torque than the motor shown in Figure l5. The same motor and the same frame used in the example of Figure l were wound with the configuration of Figure 2l. The capacitor ll7 and a 70 microfarad capacitor and the capacitor ll8 was a 500 microfarad capacitor. The motor developed a starting torque of l4.5 ft.lbs. at 38 amperes, and the motor pull-in torque was 8.5 at l3 amperes. At full load, the motor produced 3 ft.lbs. of torque at l750 rpm, and the breakdown torque was 9 ft.lbs. up to l600 rpm.

Figure 22A through 22C illustrate the vector diagrams for the motor of Figure 2l, at start, full load, and no load conditions of operation respectively. The individual voltage vectors have not been illustrated, but the resultant reference line voltage vector V is shown in each of these three figures.

For the most efficient operating conditions of the motor of Figure 2l, it is desirable to have all of the current vectors equal in length to produce an equiangular or equilateral triangle. For the motor of Figure 2l, this is readily apparent from a reference to the vectors of Figures 22A and 22B. Figure 22A shows the current conditions at motor start and Figure 22B shows the conditions at normal full load operation at l750 rpm. At no load conditions of operation, the equilateral triangle effect is not present, as is apparent from an examination of Figure 22C.

Only a limited number of winding configurations and starting switch circuits have been illustrated. Others may be employed. It also is possible to provide a reversing switch for the motor to permit it to instantly reverse direction under either no load or full load conditions.

## Claims

1. An alternating current motor with a stator core for operation from a source of single phase alternating current power, and a rotor (20), with a start winding (13) and a run winding (14) connected in series with a source of single phase alternating current power (10, via 12) on the stator core for inducing rotation of the rotor (20), and a capacitor (26) connected in parallel with the start winding (13), characterised in that the start winding (13) and capacitor (26) form an LC resonant circuit at the frequency of alternating current power from the source of power (10) throughout the starting and running operation of the motor.

2. A motor according to Claim 1 further characterized in that the winding is a plurality of start windings (33, 34) with the capacitor (35,36) connected in parallel with all of the start windings.

3. A motor according to Claims l or Claim 2 further characterized in that the run winding comprises a plurality of run windings (33,39 or 44 to 47).

4. A motor according to Claim 3 further characterized by a switch (70) to selectively connect different numbers of run windings (65,66,67 or 68) in series circuit with the start winding (l3).

5. A motor according to any preceding claim further characterized in that the winding (l3) and the run winding (l4) are formed of wire of substantially the same guage.

6. A motor according to any preceding claim further characterized in that the start winding (50 to 53 or 8l, 82) has a center tap and , said run winding (57 to 60 or l4) is connected to said center tap on said start winding.

7. A motor according to any preceding claim further characterized in that the first and second phase windings (l3 and l4) are wound on the stator core in an electrical phase displacement of 90° from each other.

8. A motor according to any preceding claim further characterized in that the capacitor (26) is an alternating current non-polarized capacitor.

9. A motor according to Claim l further characterized by a second capacitor (ll8) and switch (l2) connected in series with one another and in parallel across the capacitor (ll7) with a device (l2l) for closing the switch (l20) during starting of the motor for opening the switch (l20) during normal load conditions of operation of the motor.

10. A motor according to Claim 9 further characterized in that the switch is an AC bi-directional semiconductor switch (l40) which is conductive during motor starting and is non-conductive during normal load conditions of operation of the motor.

11. A motor according to Claim 9 or Claim 10 further characterized in that the capacitance of the second capacitor (118) is substantially greater than the capacitance of the first capacitor (117).

12. A motor according to Claim 9 further characterized in that the switch (120) is a normally closed centrifugal switch coupled (via 121) with the rotor (116) of the motor; so that upon attainment of a predetermined rotational speed of the rotor (116) the switch (120) is opened to disconnect the second capacitor (118) from the circuit.

13. A motor according to any one of claims 9 to 12 further characterized in that the device is power relay (128) with contacts (130) connected in series circuit with each of the first and second capacitors (117, 118), and the power relay (128) closes the contacts (130) whenever alternating current power is applied to the first and second windings (13, 14).

14. A motor according to any one of Claims 9 to 12 further characterized in that the device is a voltage sensitive relay (135, 136) connected in parallel with the second winding (14) to operating the switch (138), such that the sensitive relay (135, 136) closes the switch (138) during starting of the motor and opens the switch (138) during normal load conditions of operation of the motor.

**Revendications**

1. Un moteur à courant alternatif comportant un noyau stator pour le fonctionnement à partir d'une alimentation en courant alternatif monophasé, et un rotor (20), à enroulement de démarrage (13) et enroulement de marche (14) connectés en série avec une source d'alimentation en courant alternatif monophasé (10, via 12) sur le noyau stator pour induire la rotation du rotor (20), et un condensateur (26) connecté en parallèle avec l'enroulement de démarrage (13), caractérisé en ce que l'enroulement de démarrage (13) et le condensateur (26) forment un circuit résonant LC à la fréquence du courant alternatif provenant de la source d'alimentation (10) tout au long du démarrage et de la marche du moteur.

2. Un moteur selon la revendication 1 caractérisé de plus en ce que l'enroulement est une pluralité d'enroulements de démarrage (33, 34) avec le condensateur (35, 36) connecté en parallèle avec tous les enroulements de démarrage.

3. Un moteur selon la revendication 1 ou la revendication 2 caractérisé de plus en ce que l'enroulement de marche comprend une pluralité d'enroulements de marche (33, 39 ou 44 à 47).

4. Un moteur selon la revendication 3 caractérisé de plus par un contacteur (70) pour connecter de manière sélective différents nombres d'enroulements de marche (65, 66, 67 ou 68) dans un circuit série avec l'enroulement de démarrage (13).

5. Un moteur selon l'une quelconque des revendications précédentes caractérisé de plus en ce que l'enroulement (13) et l'enroulement de marche (14) sont formés de fil de calibres sensiblement identiques.

6. Un moteur selon l'une quelconque des revendications précédentes caractérisé de plus en ce que l'enroulement de démarrage (50 à 53 ou 81, 82) a une prise médiane et que ledit enroulement de marche (57 à 60 ou 14) est connecté à ladite prise médiane sur ledit enroulement de démarrage.

7. Un moteur selon l'une quelconque des revendications précédentes caractérisé de plus en ce que les enroulements des première et deuxième phases (13 et 14) sont bobinés sur le noyau stator avec un déphasage électrique de 90° l'un par rapport à l'autre.

8. Un moteur selon l'une quelconque des revendications précédentes caractérisé de plus en ce que le condensateur (26) est un condensateur non polarisé à courant alternatif.

9. Un moteur selon la revendication 1 caractérisé de plus par un deuxième condensateur (118) et contacteur (120) connectés en série l'un avec l'autre et en parallèle aux bornes du condensateur (117) avec un dispositif (121) pour fermer le contacteur (120) durant le démarrage du moteur et pour ouvrir le contacteur (120) durant le fonctionnement en charge normale du moteur.

10. Un moteur selon la revendication 9 caractérisé de plus en ce que le contacteur est un contacteur à semiconducteur bidirectionnel à courant alternatif (140) qui est en état passant durant le démarrage du moteur et en état bloqué durant le fonctionnement en charge normale du moteur.

11. Un moteur selon la revendication 9 ou la revendication 10 caractérisé de plus en ce que la capacité du deuxième condensateur (118) est sensiblement plus grande que la capacité du premier condensateur (117).

12. Un moteur selon la revendication 9 caractérisé de plus en ce que le contacteur (120) est un contacteur centrifuge normalement fermé, couplé (via 121) avec le rotor (116) du moteur; de telle manière qu'au moment où la vitesse rotationnelle prédéterminée du rotor (116) est atteinte, le contacteur (120) est ouvert pour déconnecter le deuxième condensateur (118) du circuit.

13. Un moteur selon l'une quelconque des revendications 9 à 12 caractérisé de plus en ce que le dispositif est un relais de puissance (128) aux contacts (130) connectés chacun en circuit série avec les premier et deuxième condensateurs (117, 118), et ce relais de puissance (128) ferme les contacts (130) chaque fois qu'une alimentation en courant alternatif est appliquée aux premier et deuxième enroulements (13, 14).

14. Un moteur selon l'une quelconque des revendications 9 à 12 caractérisé de plus en ce que le dispositif est un relais voltmétrique (135, 136) connecté en parallèle avec le deuxième enroulement (14) pour actionner le contacteur (138), de telle manière que le relais voltmétrique (135, 136) ferme le contacteur (138) au démarrage du moteur et ouvre le contacteur (138) durant les conditions de fonctionnement en charge normale du moteur.

## Ansprüche

1. Wechselstrommotor mit einem Statorkern mit Energieversorgung aus einer Einphasenwechselstromquelle, mit einer Anlaßwicklung (13), mit einer Betriebswicklung (14) in Serienschaltung mit einer Einphasenwechselstromquelle (10 über 12) auf dem Statorkern zum Drehen des Rotors (20) und mit einem Kondensator (26) in Parallelschaltung mit der Anlaßwicklung (13), **dadurch gekennzeichnet,** daß die Anlaßwicklung (13) und der Kondensator (26) während dem Start und dem Betrieb des Motors einen LC Resonanzkreis mit der Frequenz der Wechselstromenergie aus der Stromquelle bilden.

2. Motor nach Anspruch 1, der weiter dadurch gekennzeichnet ist, daß die Anlaßwicklung aus einer Mehrzahl von Anlaßwicklungen (33, 34) bei Parallelschaltung des Kondensators (35, 36) mit jeder der Anlaßwicklungen besteht.

3. Motor nach Anspruch 1 oder Anspruch 2, der weiter dadurch gekennzeichnet ist, daß die Betriebswicklung aus einer Mehrzahl von Betriebswicklungen (33, 39 oder 44 bis 47) besteht.

4. Motor nach Anspruch 3, der weiter durch einen Schalter zum seriellen Anschließen unterschiedlicher Betriebswicklungen (65, 66, 67 oder 68) an die Anlaßwicklung (13) gekennzeichnet ist.

5. Motor nach einem der vorhergehenden Ansprüche, der weiter dadurch gekennzeichnet ist, daß die Anlaßwicklung (13) und die Betriebswicklung aus einem mit gleicher Steigung gewickelten Draht bestehen.

6. Motor nach einem der vorhergehenden Ansprüche, der weiter dadurch gekennzeichnet ist, daß die Anlaßwicklung (50 bis 53 oder 81, 82) eine zentrale Anzapfung hat und daß die Betriebswicklung (57 bis 60 oder 14) mit der zentralen Anzapfung der Anlaßwicklung verbunden ist.

7. Motor nach einem der vorhergehenden Ansprüche, der weiter dadurch gekennzeichnet ist, daß die erste und die zweite Phasenwicklung (13 und 14) um den Statorkern mit einer elektrischen Phasenverschiebung um 90° relativ zueinander gewickelt sind.

8. Motor nach einem der vorhergehenden Ansprüche, der weiter dadurch gekennzeichnet ist, daß der Kondensator (26) ein nicht polarisierter Wechselstromkondensator ist.

9. Motor nach Anspruch 1, der weiter gekennzeichnet ist durch einen zweiten Kondensator (118) und einen zweiten Schalter (120), die in Serienschaltung miteinander verbunden sind und in Parallelschaltung über den Kondensator (117) mit einer Vorrichtung (121) zum Schließen des Schalters (120) während des Anlassens des Motors und zum Öffnen des Schalters (120) bei Motorbetrieb unter Normallast verbunden sind.

10. Motor nach Anspruch 9, weiter gekennzeichnet dadurch, daß der Schalter ein Wechselstrom-Zweirichtungs-Halbleiter-Schalter (140) ist, der während des Anlassens des Motors elektrisch leitend, während des Motorbetriebs unter Normallast nicht leitend ist.

11. Motor nach Anspruch 9 oder 10, weiter gekennzeichnet dadurch, daß die Kapazität des zweiten Kondensators (118) wesentlich größer als die Kapazität des ersten Kondensators (117) ist.

12. Motor nach Anspruch 9, weiter gekennzeichnet dadurch, daß der Schalter (120) ein normalerweise geschlossener Fliehkraftschalter ist, der (über 121) mit dem Rotor (116) des Motors gekoppelt ist, so daß bei Erreichen einer vorbestimmten Drehzahl des Rotors (116) der Schalter (120) geöffnet wird, um den zweiten Kondensator (118) vom Schaltkreis zu trennen.

13. Motor nach einem der Ansprüche 9 bis 12, weiter gekennzeichnet dadurch, daß die Vorrichtung ein Leistungsrelais (128) ist, dessen Kontakte (130) in Serienschaltung mit dem ersten bzw. zweiten Kondensator (117, 118) verbunden sind und daß das Leistungsrelais (128) die Kontakte schließt, wenn Wechselstrom der ersten und zweiten Wicklung (13, 14) zugeführt wird.

14. Motor nach einem der Ansprüche 9 bis 12, weiter gekennzeichnet dadurch, daß die Vorrichtung ein spannungssensitives Relais (135, 136) in Parallelschaltung mit der zweiten Wicklung (14) ist, um den Schalter (138) so zu betätigen, daß das sensitive Relais (135, 136) den Schalter (138) während des Anlassens des Motors schließt und den Schalter während des Motorbetriebs unter Normallast öffnet.

FIG. 1
(PRIOR ART)

FIG. 2
(PRIOR ART)

FIG. 3

FIG. 4A

FIG. 5

FIG. 4B

FIG. 6

FIG. 4C

FIG. 7

FIG. 10

FIG. 8

FIG. 9

FIG. 11

FIG. 12

FIG. 13

FIG. 14

FIG. 15

FIG. 16A

FIG. 16B

FIG. 17

TORQUE

RPM    100

FIG. 18

FIG. 16C

FIG. 19

FIG. 20

19

FIG. 21

FIG. 22A

FIG. 22B

FIG. 22C